# EUROPEAN PATENT SPECIFICATION

(11) **EP 3 420 789 B1**
(45) Date of publication and mention of the grant of the patent: **14.10.2020**
(21) Application number: 17179116.3
(22) Date of filing: 30.06.2017
(51) Int. Cl.: A01B 63/22, A01B 69/00

(54) **METHOD FOR OPERATING AN AGRICULTURAL SYSTEM AND AGRICULTURAL SYSTEM**
VERFAHREN ZUM BETRIEB EINES LANDWIRTSCHAFTLICHEN SYSTEMS UND LANDWIRTSCHAFTLICHES SYSTEM
PROCÉDÉ DE FONCTIONNEMENT D'UN SYSTÈME AGRICOLE ET SYSTÈME AGRICOLE

(43) Date of publication of application: 02.01.2019
(73) Proprietor: Kverneland Group Operations Norway AS, 4353 Klepp Stasjon (NO)
(72) Inventor: KRAGGERUD, Per Gunnar, 4355 Kvernaland (NO); HONKANEN, Joel, 4352 Kleppe (NO)
(74) Representative: Bittner, Thomas L.

(56) References cited:
- WO-A1-84/02250
- WO-A1-93/17541
- WO-A1-2016/131684
- WO-A1-2017/005263
- US-A1- 2012 261 146

## Description

The present disclosure refers to a method for operating an agricultural system and an agricultural system.

### Background

For agricultural systems, a plough may be hitched to a tractor using a hitch mechanism. Working tools may be provided on the plough. The working tools may be displacable between different working positions. The different working positions may be assigned to different modes of operation. For example, in a working mode of operation the working tools may engage with the soil, and in a mode of transportation, the working tools may be disengaged from the soil

The document WO 93/17541 A1 discloses a combination of a semi-mounted reversible plough and a seed preparation device which are towed behind a tractor in order to carry out a ploughing action and a seed preparation action during a single pass over the ground, in which the plough has a short leading towing beam provided with a forward hitch for coupling the plough to the rear of the tractor; a long towing beam coupled with beam and forming a rearward prolongation thereof; a carrying beam coupled with long towing beam and carrying pairs of reversible plough bodies along its length; a cylinder operated crank mechanism operable to rotate towing beam and carrying beam as a unit about the longitudinal axis of beam in order to reverse the position of the plough bodies; a coupling beam mounted at its forward end via a mounting beam on the carrying frame and towing beam and projecting laterally therefrom; a swivel connector at the trailing end of coupling beam which is attached to the leading end of a draw bar of the device; and a cylinder operated parallelogram linkage which can be operated in order to initiate relative lateral displacement to take place between plough and device during forward movement of the combination, followed by pivoting of the carrying beam and towing beam about the longitudinal axis during reversal of the plough bodies which is permitted by the swivel connector, and which takes place during movement of the combination over the headland prior to a return pass over the field to be ploughed and prepared. A seed unit may be coupled with the seed preparation device, so that ploughing, soil preparation and seeding can take place during a single passage across a field, and the entire combination can automatically adjust itself during reversal of the plough bodies and turning of the combination in the headland.

The document WO 2016/131684 A1 describes an agricultural vehicle which includes at least one geospatial sensor for locating the vehicle within a geographic area; at least one event trigger; at least one actuator for actuating a component onboard the vehicle; and a headland management system (HMS) for carrying out a headland turn sequence (HTS) at a predetermined location within the geographic area. The HMS includes a memory for storing at least a portion of an HTS, and a visual display for displaying at least a portion of an HTS. The HMS is configured to display a real-time map on the visual display, including a position of the vehicle on the map, and at least one future HTS event forming at least part of an HTS. The HMS is configured to allow an operator to modify at least one HTS event on the real-time map.

### Summary

It is an object of the present disclosure to provide a method for operating an agricultural system and an agricultural system for improving operability of the agricultural system.

A method for operating an agricultural system and an agricultural system according to the independent claims 1 and 9, respectively, are provided. Alternative embodiments are disclosed in dependent claims.

According to an aspect, a method for operating an agricultural system is provided. The method comprises providing an agricultural system having a tractor, a plough hitched to the tractor through a hitch mechanism, working tools received on a frame of the plough, a depth control wheel adjustable in height relative to the frame, a top link connected to the frame for lifting the frame, and a control system provided on at least one of the tractor and the plough. While the plough is moved by the tractor over the field, the plough is operated in a normal mode of operation, the working tools of the plough being engaged with the soil in the normal mode of operation. A request signal is provided in the control system, the request signal indicating a request for starting a headland control mode of operation. In response to the request signal, the headland control mode of operation is started. The headland control mode of operation comprises: providing control signals in the control system, the control signals defining a sequence of positions for both the top link and the depth control wheel, wherein the sequence of positions comprises positions assigned to an intermediate plough working position in which some of the working tools are disengaged from the soil and a transport plough position in which all working tools are disengaged from the soil; and operating the top link and the depth control wheel according to the control signals while the tractor with the plough is arriving at the headland, moving through the headland and leaving the headland.

According to another aspect, an agricultural system is provided, having a tractor, a plough hitched to the tractor through a hitch mechanism, working tools received on a frame of the plough, a depth control wheel adjustable in height relative to the frame, a top link connected to the frame for lifting the frame, and a control system provided on at least one of the tractor and the plough. The control system is configured to operate the plough in a normal mode of operation while the plough is moved by the tractor over the field, the working tools of the plough being engaged with the soil in the normal mode of operation. The control system is further configured to provide a request signal in the control system, the request signal indicating a request for starting a headland control mode of operation, and, in response to the request signal, start the headland control mode of operation. The headland control mode of operation comprises: providing control signals in the control system, the control signals defining a sequence of positions for both the top link and the depth control wheel, wherein the sequence of positions comprises positions assigned to an intermediate plough working position in which some of the working tools are disengaged from the soil and a transport plough position in which all working tools are disengaged from the soil; and operating the top link and the depth control wheel according to the control signals while the tractor with the plough is arriving at the headland, moving through the headland and leaving the headland.

The top link and / or the depth control wheel may be actuated by a control system. For example, the top link and / or the depth control wheel may comprise a hydraulic cylinder, an electric motor and / or any other type of actuator. The top link and / or the depth control wheel may be manually adjustable.

The sequence of positions may be a timed sequence of positions, the timed sequence of positions being defined by a time between the positions in the sequence. The time between positions following each other in the sequence may be equal or different. In an alternative embodiment, the sequence of positions may be a distance (based) sequence of positions, the distance sequence of positions defined by a distance travelled between the positions in the sequence. The distance travelled may be a distance travelled by the tractor, the plough, or any part of the tractor and / or the plough. The distance travelled between positions of the sequence may be equal for all positions or different.

The sequence of positions may be a combined timed and distance sequence of positions being defined by any combination of a time between some neighboring positions in the sequence, a distance travelled between other neighboring positions in the sequence, and a combination of time and distance travelled between neighboring positions. For example, in the sequence of positions, a next position in the sequence may be considered reached when a certain time has passed and a certain distance has been travelled counting from the previous positions. Alternatively, a next position in the sequence may be considered reached when either a certain time has passed or a certain distance has been travelled counting from the previous positions. As a further alternative or in addition, the sequence may be defined, for two neighboring positions, by a time and a distance travelled and it may be determined after the sequence of positions has been defined whether a next position in the sequence is considered reached based on the time, based on the distance travelled, or based on a combination thereof.

The sequence of positions may include a definition of a progression between the positions of the sequence. For example, change of position between two positions in the sequence of positions may be linear over time and / or distance. In addition or as an alternative, change of position between positions in the sequence of positions may follow an asymptotic function. Other examples include polynomial functions, trigonometric functions and exponential functions. Different types of progression may be combined in the sequence of positions.

The sequence of positions for both the top link and the depth control wheel may be defined in such a way that a desired engaging and disengaging of the working tools on the frame of the plough is achieved. For example, the working tools may be arranged on the frame of the plough in a diagonal fashion with respect to the axis of movement of the plough. In such an embodiment, the sequence of positions may be defined such that all working tools on the frame of the plough disengage from the soil at an imaginary line on the field that is perpendicular to the axis of movement of the plough. Alternatively, the sequence of positions may be defined such that all working tools on the frame of the plough disengage from the soil at a line that forms any desired angle with regard to the axis of movement of the plough. The line may be a straight line. As a further alternative, the sequence of positions may be defined such that all working tools on the frame of the plough disengage from the soil such that the end of the ploughed area forms any desired shape.

The control signals defining the sequence of positions may additionally define a sequence of operation states for additional devices. In general, in combination with the control signals assigned to the positions of the sequence of positions, additional control signals may be provided in the control system, the additional control signals configured to control operation of a working tool in one or more of the positions defined in the sequence. For example, movement such as rotation or non-movement of a working tool may be defined. There may be positions in the sequence in which the working tool is moved. However, in other positions of the sequence the same working tool may not move, for example, by locking movement.

The transport plough position may be a headland transport plough position which may be different from a road transport plough position. For example, the lifting height of the plough, the angle of the plough, and / or values for other parameters of the headland transport plough position may be different from values for the parameters for the road transport plough position. In an embodiment, the headland transport plough position may be reserved for use in the headland control mode of operation while the road transport plough position is assumed when the plough is transported outside the headland control mode of operation.

The control signals, for the sequence of positions, may further define positions for a linkage of the hitch mechanism by which the plough is hitched to the tractor. The hitch mechanism may comprise a three-point hitch. Such three-point hitch may comprise three movable arms. In this case, the three arms may be configured to comprise two lower arms and an upper arm. The upper arm may comprise the top link. The plough may be hitched to the tractor by attaching the plough to the three arms of the three-point hitch.

In addition or as an alternative, the control signals, for the sequence of positions, may further define positions of other devices and / or mechanisms. For example, the control signals may define positions for an actuator to rotate the frame of the plough. Therefore, the plough may be in different rotation positions during the sequence of positions. This may result in an engagement and / or a disengagement of the working tools.

The linkage of the hitch mechanism may be actuated from a control system configured to be operated in response to user input. For example, the hitch mechanism may comprise a hydraulic cylinder, an electric motor and / or any other type of actuator. Alternatively or additionally, the linkage of the hitch mechanism may be manually adjustable.

The providing of the control signals, in the control system, comprises receiving control information about a pre-defined sequence of positions and generating the control signals according to the information about the pre-defined sequence of positions. For example, a pre-defined sequence of positions may comprise positions for the top link, the depth control wheel and / or the hitch mechanism, each defined for certain points in time that are determined by the time passed since the start of the pre-defined sequence of positions. In an alternative embodiment, a pre-defined sequence of positions may comprise positions for the top link, the depth control wheel and / or the hitch mechanism, each defined for certain distances travelled since reaching the previous position of the pre-defined sequence of positions. Control signals may be generated in such a way to ensure that the top link, the depth control wheel and / or the hitch mechanism reach each position as defined by the pre-defined sequence of positions at the point in time defined for that position in the pre-defined sequence of positions and / or when the distance defined for that position in the pre-defined sequence of positions has been travelled.

The receiving of the control information may further comprise selecting the control information from a plurality of pre-defined sequences of positions. For example, control information may be selected from different pre-defined sequences of positions that are defined to be used with different models of ploughs, different models of tractors, different speeds, different types of soil, and / or different shapes of the field to be ploughed.

The selecting of the control information may comprise: detecting a present operation parameter for at least one of the tractor or the plough; and selecting the control information in dependence on the operation parameter. For example, a speed of the tractor may be detected. Control information may then be selected from a plurality of pre-defined sequences of positions, each defined to be suitable for a range of speeds, such that the detected speed falls within the range of speeds for which the selected pre-defined sequence of positions is suitable. In another example, an operation parameter of the plough may be detected. The operation parameter may allow determining a type of soil the working tools of the plow are engaged with. For example, such operation parameter may be a load on the working tools and / or a vibration frequency or amplitude of the plough. The control information may then be selected to suit a certain type of soil determined from the detected operation parameter. The providing of the control signals may comprise: detecting a present operation parameter for at least one of the tractor or the plough; and configuring the control signals in dependence on the operation parameter. For example, a speed of the tractor and / or the plough may be detected. Other examples of operation parameters that may be detected, alone or in combination, include a load or force on the plough; a position and / or a distance travelled for ef the tractor, the plough and / or their specific components; a time passed and / or a distance travelled since a pre-determined event occurred; an engagement depth of the working tools of the plough in the soil; and vibration frequency and / or amplitude. Configuring the control signals in dependence on the operation parameter may comprise configuring the positions and / or the sequence of the positions, such as the time, the distance travelled and / or order in which the positions are to be reached.

For example, in the case that the detected operation parameter is a speed of the tractor, the speed of the sequence of positions may be adapted to the speed of the tractor. In such an embodiment, the sequence speed may be increased, i.e. the time between the positions within the sequence may be decreased, when a high speed of the tractor is detected, and the sequence speed may be decreased, i.e. the time between the positions within the sequence may be increased, when a low speed of the tractor is detected.

Alternatively or additionally, configuring the control signals in dependence on a detected operation parameter may include amending the pre-defined sequence in dependence on the detected operation parameter. For example, as a reaction to detecting a certain load on the plough, engagement depth of the working tools in the soil, vibration characteristics or a combination thereof, in a sequence of positions resulting in a raising of the working tools, additional positions may be added that cause the working tools to lower, resulting in a deeper engagement of the working tools with the soil, before the working tools are raised. As another example, positions may be added between positions of the sequence of positions to result in a desired variation of movement between the positions of the unamended sequence of positions. Instead of amending the sequence of positions by further positions, or in combination with adding positions, the sequence of positions may be amended by omitting steps.

The providing of the request signal may comprise generating the request signal in response to a user input received in the control system. For example, the user may select a "headland mode" at a user interface of the control system, and the request signal may be provided in the control system in response to the user selection or input.

The generating of the request signal in response to a user input received in the control system may comprise generating the request signal in response to a user input being indicative of a direct instruction to start the headland control mode. Alternatively or additionally, generating the request signal in response to a user input received in the control system may comprise generating the request signal in response to user input different from a direct instruction to start the headland control mode. For example, the request signal may be generated in response to detecting manual operation of some element of the tractor such as the tractor hitch up / down controls.

The providing of the request signal may comprise generating the request signal in response to position information provided for a geographical position of the tractor and / or the plough in the control system. For example, the position of the tractor may be determined using a GPS signal (GPS - Global Positioning System). The request signal may be generated in response to receiving a GPS signal that corresponds to a predefined position, or one of a plurality of predefined positions, of the tractor within the field that is worked. The position or plurality of positions of the tractor within the field may be defined in a way that results in the headland control mode being started such that desirable characteristics of the soil in the headland are achieved.

In an alternative embodiment, the request signal may be generated in response to a combination of a user input received in the control system and position information provided for a geographical position of the tractor and / or the plough in the control system. For example, based on position information, the user may be prompted to confirm starting the headland control mode. Upon such confirmation by the user, the request signal may then be generated. In another example, based on position information, the user may be given the option to cancel starting the headland control mode. If no such user input is received within a certain time limit, the request signal may be generated.

With regard to the agricultural system, the alternative embodiments disclosed regarding the method for operating an agricultural system above may apply mutatis mutandis.

### Description of embodiments

Following, further embodiments are described with reference to the figures. In the figures, show
- Fig. 1: a schematic representation of a control system of an agricultural system provided with a tractor and a plough hitched to the tractor;
- Fig. 2: a schematic representation of an agricultural system wherein the plough is operated in a normal mode of operation; and
- Fig. 3: a schematic representation of the agricultural system of Fig. 2, wherein the plough is operated in a headland control mode of operation in an intermediate plough working position;
- Fig. 4: a schematic representation of the agricultural system of Fig. 2, wherein the plough is operated in the headland control mode of operation in a transport plough position;
- Fig. 5: a schematic representation of the agricultural system of Fig. 2, wherein the plough is operated in the headland control mode of operation in a transport plough position after the tractor and plough have turned;
- Fig. 6: a schematic representation of the agricultural system of Fig. 2, wherein the plough is operated in the headland control mode of operation in an intermediate plough working position after the tractor and plough have turned; and
- Fig. 7: a schematic representation of the agricultural system of Fig. 2, wherein the plough is operated in the normal mode of operation after the tractor and plough have turned.

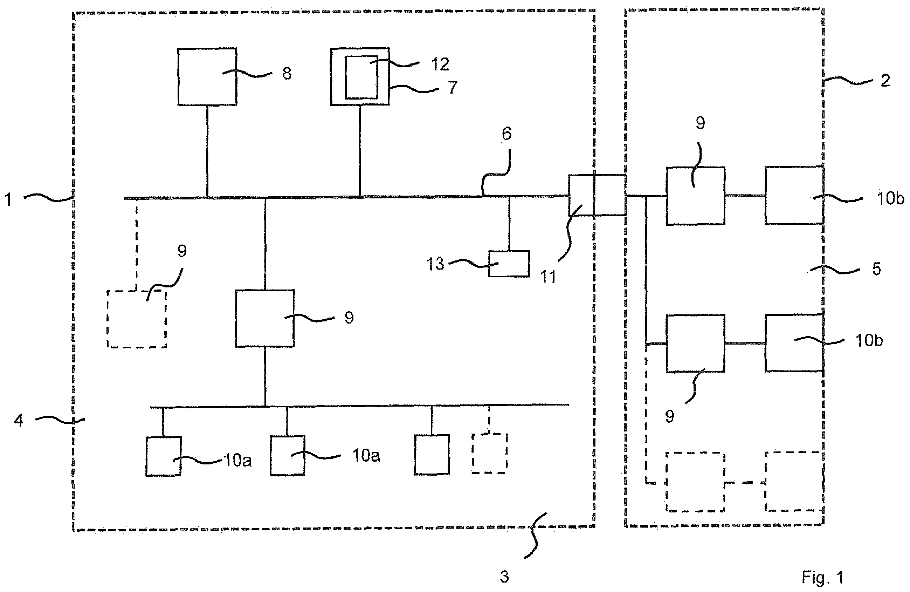

Fig. 1 shows a schematic representation of a control system of an agricultural system having a tractor 1 and a plough 2 hitched to the tractor 1.

An agricultural system control network 3 provides for an electronic control system of the agricultural system. The agricultural system control network 3 comprises a tractor control network 4 and a plough control network 5. The agricultural system control network 3 is having a data bus 6 to which, according to the embodiment shown, a user control terminal 7, a task controller 8, and a plurality of electronic control units 9 are connected. Each of the electronic control units 9 is assigned to at least one functional element 10a, 10b provided in the tractor 1 and the plough 2, respectively. In an alternative embodiment, the electronic control units 9 connected to the user control terminal 7 through the data bus may only be applied to the functional element(s) 10b of the plough 2, but not to the functional element(s) 10a of the tractor.

With regard to the plough 2, the functional elements 10b may also be referred to as working or functional unit.

Functional elements 10a, 10b comprise the top link and the depth control wheel. In alternative embodiments, functional elements 10a, 10b may further comprise the hitch mechanism and / or one or more sensing elements. When a sensing element is provided, an electronics control unit 9 assigned to the sensing element may be provided as sensor electronics. Sensing element and sensor electronics may be combined in a single sensor unit. When an electronics control unit 9 is provided as sensor electronics, the sensor electronics may connect directly to the data bus 6. As an alternative, a further electronics control unit 9 may be provided to connect the sensor electronics to the data control bus 6. As a further example, functional elements 10a, 10b may, additionally or alternatively, comprise a GPS unit.

In an embodiment the top link is provided as a functional element 10a in the tractor 1 and the depth control wheel 10b may be provided as a functional element 10b in the plough 2. In an alternative embodiment, both the top link and the depth control wheel may be provided as functional elements 10b in the plough 2. Other functional elements may be provided, in any desirable combination, as functional elements 10a in the tractor 1 and / or as functional elements 10b in the plough 2.

For example, the top link may be actuated by a hydraulic cylinder. A top link control valve may be placed on the plough 2. In an alternative embodiment, a hydraulic system of the tractor 1 may be used to actuate the top link.

Through the data bus 6, electronic data may be transmitted between the components, units, modules or elements connected to the data bus 6. The electronic control system of the agricultural system control network 3 may implement the ISO 11783 standard, preferably the ISO 11783 standard.

The data bus 6 is provided with a plug connector 11 connecting the tractor control network 4 and the plough control network 5. In addition or as an alternative, electronic data may be transmitted by wireless data transmission. The data bus 6 may comprise a wireless data communication channel.

The user or operator control terminal 7 is provided with a terminal display 12 and provides for user control and user display. Further, the user control terminal 7 is provided with a processor unit comprising a processor and a memory element connected to the processor. Multiple software applications implemented on the user terminal may be running simultaneously.

Through the user control terminal 7, user input may be received for controlling the functional elements 10a, 10b of the agricultural machine or system. Also, through the terminal display 12, operation information may be displayed to the user.

The agricultural system control network 3 may comprise a power supply unit 13. In the embodiment shown in Fig. 1, power supply unit 13 is provided in the tractor 1. Alternatively or additionally one or more power supply units 13 may be provided in the plough 2 and / or externally.

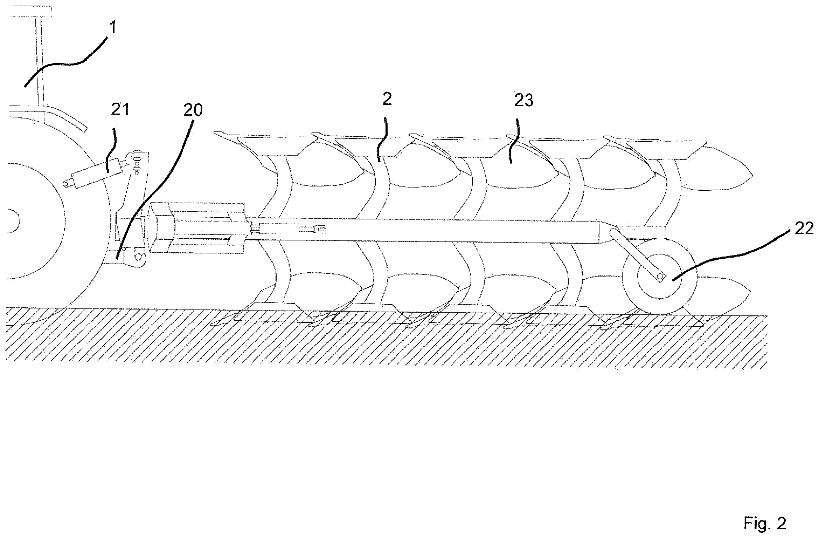

Referring to Figs. 2 to 7, an embodiment of the method for operating an agricultural system is described. An embodiment of the agricultural system is shown at different points in time.

Fig. 2 shows the agricultural system in a normal mode of operation. The plough 2 is hitched to the tractor 1 through a hitch mechanism 20. The tractor 1 moves the plough 2 over the field. The top link 21 and the depth control wheel 22 assume positions that cause all of the working tools 23 of the plough 2 to be engaged with the field.

In an embodiment, the positions of top link 21 and depth control wheel 22 may be such that a desired load on the plough is achieved, i.e. the working tools 23 exert a desired force on the soil.

In a further embodiment, the positions of the top link 21 and the depth control wheel 22 may depend on the position of the hitch mechanism 20 to achieve the desired engagement of the working tools 23 with the soil.

In response to a request signal being provided in the control system, the headland control mode is started. The request signal may be generated in response to a user input. For example, the user may push a "headland control" button provided at user control terminal 7. The request signal may then be generated in the control terminal 7. In an alternative embodiment, the signal generated by the "headland control" button may be received via the data bus 6 by the task controller 8 which may in turn generate the request signal. Such button may be implemented, for example, as a push button or a display icon.

Additionally or alternatively, the request signal may be generated in response to position information provided for a geographical position of the tractor and / or the plough in the control system. For example, position information regarding the tractor and / or the plough may be acquired using a GPS unit providing a functional element 10a, 10b. Position information may be received and processed in the control terminal 7 to generate, solely or in combination with a user input, the request signal. Alternatively, position information may be received via the data bus 6 in the task controller 8 and may be processed, solely or in combination with a user input, to generate the request signal. For example, in one embodiment, the request signal may be generated, and the headland control mode of operation may be started, in response to the control terminal 7 and / or the task controller 8 receiving position information indicative of the agricultural system approaching a part of the field that is designated as headland.

In another embodiment, based on position information received, a signal may be generated causing the user may be prompted, for example via the terminal display 12, to confirm starting the headland control mode. The user may then confirm starting the headland control mode by pushing a "headland control" button at user control terminal 7. Upon receiving the confirmation by the user, the request signal is generated. In a further embodiment, based on position information received, a signal may be generated causing an option to cancel starting the headland control mode to be displayed to the user via the terminal display 12. The user may then push a button at user control terminal 7 to cancel starting the headland control mode. If no such user input is received within a certain time limit, the request signal may be generated or disregarded.

When the headland control mode is started, control signals are provided in the control system. For example, the control signals may be generated by the control terminal 7 or the task controller 8. The control signals define a sequence of positions for both the top link 21 and the depth control wheel 22. Additionally, the control signals may further define positions for a linkage of the hitch mechanism 20 for the sequence of positions.

The top link 21, the depth control wheel 22 and, in certain embodiments, the hitch mechanism 20 linkage are then operated according to the control signals. For example, control signals may be transmitted from the control terminal 7 and / or the task controller 8 to the electronic control unit 9 assigned to the top link 21. The control unit 9 assigned to the top link 21 may then control the position of top link 21 according to the control signals.

In one example, the top link 21 may comprise a hydraulic cylinder to change the position of the top link 21. In this case, the control unit 9 may control the hydraulic cylinder to actuate the top link 21 in such a way that the top link 21 assumes a position according to the control signals received.

In other embodiments, an electric motor or other type of actuator may be provided for actuating the top link 21. In such embodiments, the electric motor or other type of actuator may accordingly be controlled by a control unit 9 to actuate the top link 21 in such a way that the top link 21 assumes a position according to the control signals received.

In further embodiments, the depth control wheel 22 and / or hitch mechanism 20 linkage may respectively be actuated using a hydraulic cylinder, an electric motor or other type of actuator. In such embodiments, the different examples outlined above with regard to the actuation of the top link 21 apply accordingly.

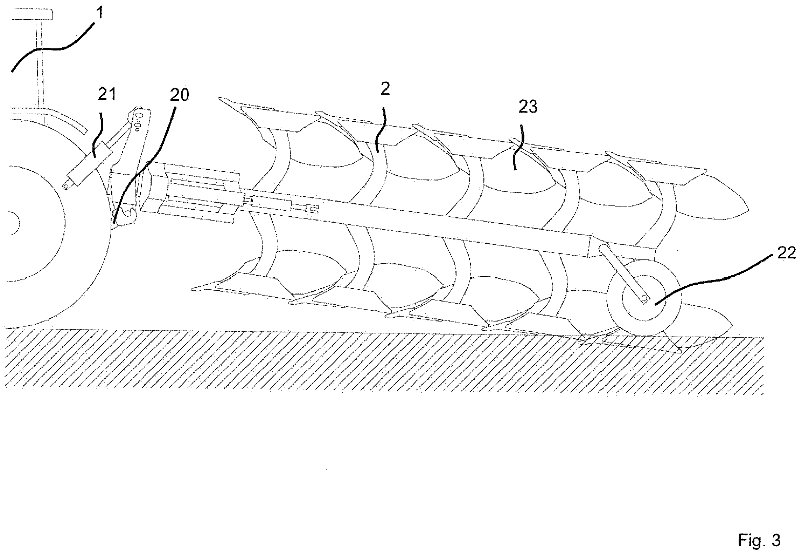

While arriving at the headland, the agricultural system may assume an intermediate plough working position in which some of the working tools 23 are disengaged from the soil. Fig. 3 shows the agricultural system in such an intermediate position. In the embodiment shown, the end of the plough 2 hitched to the tractor is raised by the hitch mechanism 20 linkage assuming a raised position according to the control signals. In comparison to the normal mode of operation shown in Fig. 2, the top link 21 is extended, causing the back end of the plough 2 to be inclined towards the ground. Inclination of the plough 2 is further defined by the position of the depth control wheel 22 which is adjustable in height relative to the frame of the plough, thereby controlling the distance between the back end of the plough 2 and the ground. In the example of Fig. 3, working tools 23 at the back of the plough 2 are still engaged with the soil while working tools 23 at the front of the plough 2 are disengaged from the soil.

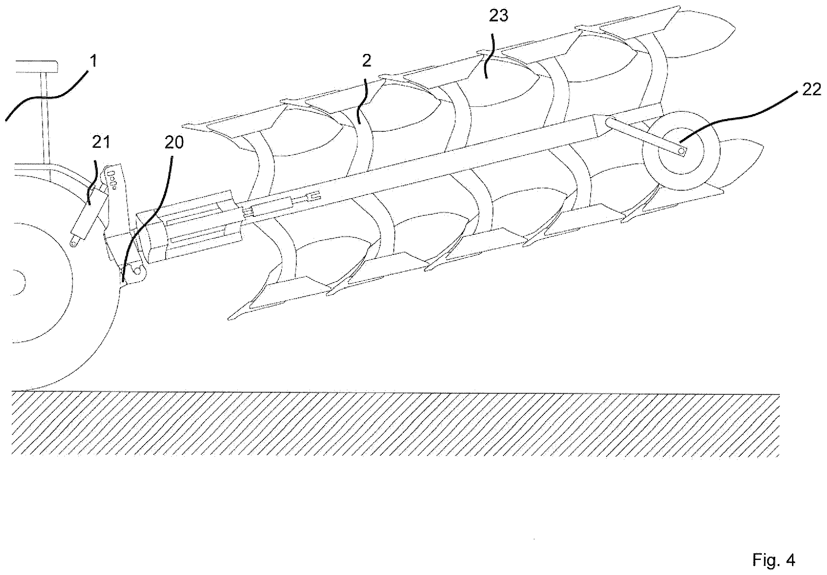

Fig. 4 shows the agricultural system in a transport plough position in which all working tools are disengaged from the soil. In the embodiment shown, this position is assumed by retracting the top link 21, thereby causing the plough 2 to lift off the ground with the back end of the plough 2 being inclined upwards.

While the plough 2 is arriving at the headland, the transition from the intermediate plough working position shown in Fig. 3 to the transport plough position shown in Fig. 4, according to the sequence of positions, may be implemented such that the working tools 23 disengage from the soil essentially along a line perpendicular to the axis of movement of the plough during the normal mode of operation. To achieve this, the sequence of positions may be adapted to the positioning of the working tools 23 on the plough 2.

In an alternative embodiment, the transition from the intermediate plough working position to the transport plough position may be implemented such that the working tools 23 disengage from the soil essentially along a line, e.g. a straight line, at a desired angle with regard to the axis of movement of the plough during the normal mode of operation. In a further alternative embodiment, the transition from the intermediate plough working position to the transport plough position may be implemented such that the working tools 23 disengage from the soil such that the end of the ploughed area forms any desired shape.

For achieving a desired form of disengagement of the working tools 23 from the soil, the control information may be adapted in different ways. For example, the control information may be selected from a plurality of pre-defined sequences of positions. In embodiments of the invention, control information may be selected from different pre-defined sequences of positions that are defined to be used with different models of ploughs, different models of tractors, different speeds, different types of soil, different shapes of the field to be ploughed, or combinations thereof.

In embodiments of the invention, one or more present operation parameters of at least one of the tractor 1 or the plough 2 may be detected and control information may be selected in dependence on the one or more operation parameters. Alternatively or additionally, control signals may be configured in dependence on the one or more operation parameters.

Present operation parameters to be detected may include a speed of the tractor 1 and / or the plough 2; load or force on the plough 2; a position of the tractor, the plough and / or their specific components; a time passed and / or a distance travelled since a pre-determined event occurred; an engagement depth of the working tools 23 of the plough 2 in the soil; and vibration frequency and / or amplitude; or any combination thereof.

In an embodiment in which a speed is detected for the agricultural system is detected, control information may be selected from a plurality of pre-defined sequences of positions, each defined to be suitable for a range of speeds, such that the detected speed falls within the range of speeds for which the selected pre-defined sequence of positions is suitable. Alternatively or additionally, control information may be configured according to the detected speed. For example, the sequence speed may be increased, i.e. the time between the positions within the sequence may be decreased, when a high speed of the tractor is detected, and the sequence speed may be decreased, i.e. the time between the positions within the sequence may be increased, when a low speed of the tractor is detected. By selecting a suitable pre-defined sequence of positions and / or configuring the sequence speed, a desired form of disengagement of the working tools 23 from the soil may be achieved for different speeds of the agricultural system.

Another example of configuring the control signals is, alternatively or additionally, adding or removing positions in the sequence of positions. One possible application of this method is achieving different inclinations of the plough 2 in dependence on the detected operation parameter or operation parameters.

While the agricultural system is in the transport plough position, the tractor 1 may turn within the headland, without ploughing the soil in the headland, to the resume ploughing the field in the opposite direction parallel to the soil previously ploughed.

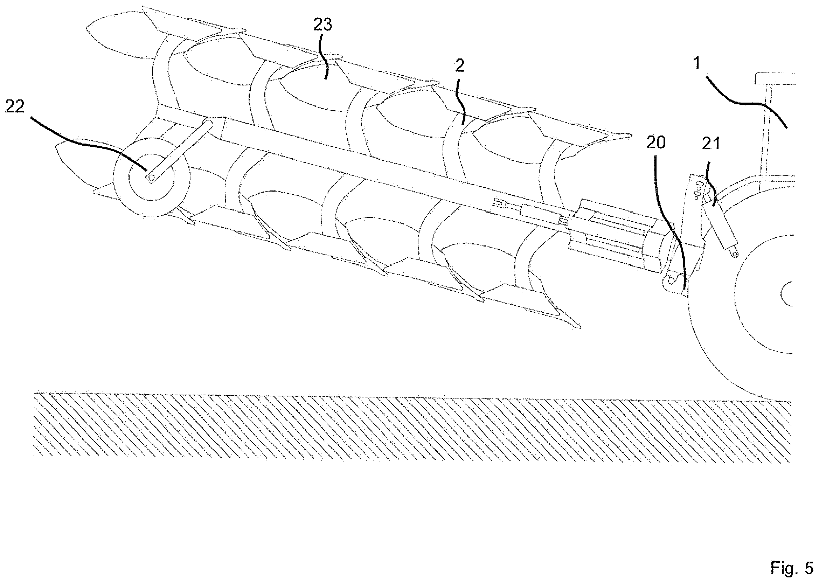

Fig. 5 shows the agricultural system in a transport plough position, in which all working tools are disengaged from the soil, after the tractor 1 has turned. In the embodiment shown in Fig. 5, the depth control wheel 22 is brought into a lower position to prepare the system for again assuming an intermediate plough working position such that a desired form of engagement of the working tools 23 with the soil may be achieved when the agricultural system leaves the headland.

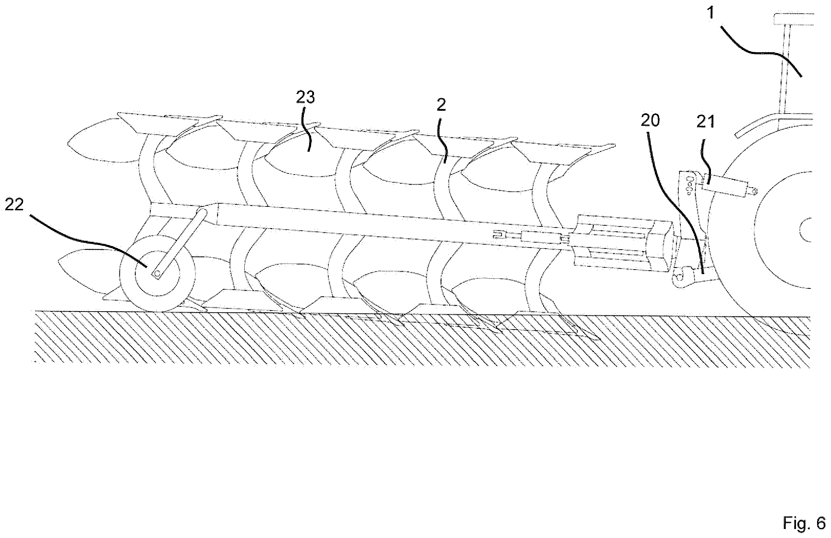

In Fig. 6, the agricultural system is shown in an intermediate plough working position after the tractor 1 has turned in which some of the working tools 23 are still disengaged from the soil. In the embodiment shown, the end of the plough 2 hitched to the tractor is lowered by the hitch mechanism 20 linkage assuming a lowered position according to the control signals. The top link 21 is retracted, causing the back end of the plough 2 to be inclined upwards. Inclination of the plough 2 is further defined by the position of depth control wheel 22. In the example of Fig. 6, working tools 23 at the front of the plough 2 are already engaged with the soil while working tools 23 at the back of the plough 2 are still disengaged from the soil.

For achieving a desired form of engagement of the working tools 23 with the soil, the control information may be adapted in different ways. In this regard, the explanations given above concerning the adaptation of control information for disengagement of the working tools 23 from the soil apply accordingly.

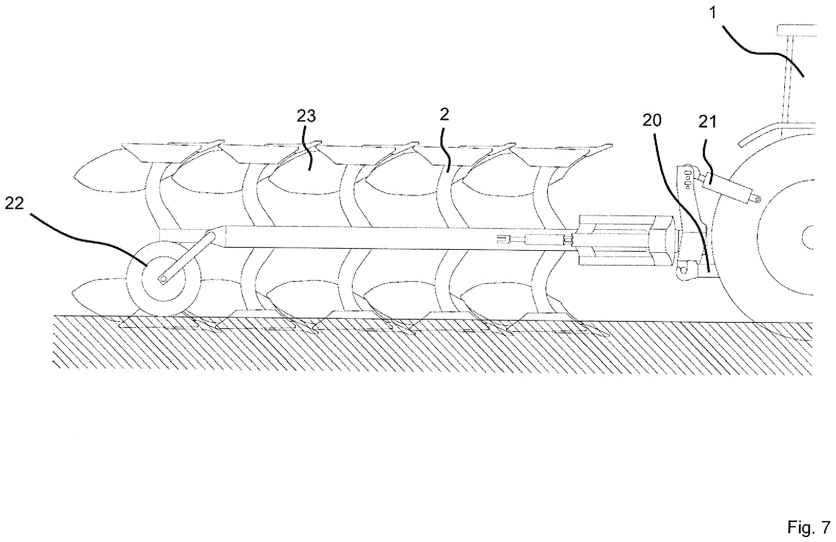

Fig. 7 shows the agricultural system after completing the turn and leaving the headland. The normal mode of operation has been resumed and all working tools 23 are engaged with the soil. The mode of operation is equivalent to the mode shown in Fig. 2 with the direction of movement of the agricultural system being reversed.

## Claims

1. Method for operating an agricultural system having
- a tractor (1);
- a plough (2) hitched to the tractor (1) through a hitch mechanism (20);
- working tools (23) received on a frame of the plough (2);
- a depth control wheel (22) adjustable in height relative to the frame;
- a top link (21) connected to the frame for lifting the frame; and
- a control system provided on at least one of the tractor (1) and the plough (2);
the method comprising
- operating the plough (2) in a normal mode of operation while the plough (2) is moved by the tractor (1) over the field, the working tools (23) of the plough (2) being engaged with the soil in the normal mode of operation;
- providing a request signal in the control system, the request signal indicating a request for starting a headland control mode of operation; and
- in response to the request signal, starting the headland control mode of operation comprising:
- providing control signals in the control system, the control signals defining a sequence of positions for both the top link (21) and the depth control wheel (22), wherein the sequence of positions comprises positions assigned to an intermediate plough working position in which some of the working tools (23) are disengaged from the soil and a transport plough position in which all working tools (23) are disengaged from the soil, wherein the providing of the control signals, in the control system, comprises receiving control information about a pre-defined sequence of positions and generating the control signals according to the information about the pre-defined sequence of positions; and
- operating the top link (21) and the depth control wheel (22) according to the control signals while the tractor (1) with the plough (2) is arriving at the headland, moving through the headland and leaving the headland.

2. Method of claim 1, wherein the control signals, for the sequence of positions, are further defining positions for a linkage of the hitch mechanism (20) by which the plough (2) is hitched to the tractor (1).

3. Method of claim 1 or 2, wherein the receiving of the control information comprises selecting the control information from a plurality of pre-defined sequences of positions.

4. Method of claim 3, wherein the selecting the control information comprises
- detecting a present operation parameter for at least one of the tractor (1) or the plough (2); and
- selecting the control information in dependence on the operation parameter.

5. Method of at least one of the preceding claims, wherein the providing of the control signals comprises
- detecting a present operation parameter for at least one of the tractor (1) or the plough (2); and
- configuring the control signals in dependence on the operation parameter.

6. Method of at least one of the preceding claims, wherein the providing of the request signal comprises generating the request signal in response to a user input received in the control system.

7. Method of at least one of the preceding claims, wherein the providing of the request signal comprises generating the request signal in response to position information provided for a geographical position of the tractor (1) and / or the plough (2) in the control system.

8. An agricultural system, having
- a tractor (1);
- a plough (2) hitched to the tractor (1) through a hitch mechanism (20);
- working tools (23) received on a frame of the plough (2);
- a depth control wheel (22) adjustable in height relative to the frame;
- a top link (21) connected to the frame for lifting the frame; and
- a control system provided on at least one of the tractor (1) and the plough (2); wherein the control system is configured to
- operate the plough (2) in a normal mode of operation while the plough (2) is moved by the tractor (1) over the field, the working tools (23) of the plough (2) being engaged with the soil in the normal mode of operation;
- provide a request signal in the control system, the request signal indicating a request for starting a headland control mode of operation; and
- in response to the request signal, start the headland control mode of operation comprising:
- providing control signals in the control system, the control signals defining a sequence of positions for both the top link (21) and the depth control wheel (22), wherein the sequence of positions comprises positions assigned to an intermediate plough working position in which some of the working tools (23) are disengaged from the soil and a transport plough position in which all working tools (23) are disengaged from the soil, wherein the providing of the control signals, in the control system, comprises receiving control information about a pre-defined sequence of positions and generating the control signals according to the information about the pre-defined sequence of positions; and
- operating the top link (21) and the depth control wheel (22) according to the control signals while the tractor (1) with the plough (2) is arriving at the headland, moving through the headland and leaving the headland.

## Patentansprüche

1. Verfahren zum Betreiben eines landwirtschaftlichen Systems mit
- einem Traktor (1);
- einem Pflug (2), der über einen Anhängerkupplungsmechanismus (20) an den Traktor (1) angekuppelt ist;
- Arbeitsgeräten (23), die auf einem Rahmen des Pfluges (2) aufgenommen sind;
- einem Tiefensteuerrad (22), das in der Höhe relativ zum Rahmen einstellbar ist;
- einem Oberlenker (21), der mit dem Rahmen zum Anheben des Rahmens verbunden ist; und
- einem Steuersystem, das an dem Traktor (1) und/oder dem Pflug (2) bereitgestellt ist;
wobei das Verfahren Folgendes umfasst:
- Betreiben des Pfluges (2) in einem normalen Betriebsmodus, während der Pflug (2) vom Traktor (1) über das Feld bewegt wird, wobei die Arbeitsgeräte (23) des Pfluges (2) im normalen Betriebsmodus mit dem Boden in Eingriff stehen;
- Bereitstellen eines Anforderungssignals in dem Steuersystem, wobei das Anforderungssignal eine Anforderung zum Starten eines Vorgewende-Betriebssteuermodus anzeigt; und,
- als Antwort auf das Anforderungssignal, Starten des Vorgewende-Betriebssteuermodus, umfassend:
- Bereitstellen von Steuersignalen in dem Steuersystem, wobei die Steuersignale eine Abfolge von Positionen sowohl für den Oberlenker (21) als auch für das Tiefensteuerrad (22) definieren, wobei die Abfolge von Positionen Positionen umfasst, die einer Zwischen-Pflugarbeitsposition, in der einige der Arbeitsgeräte (23) vom Boden gelöst sind, und einer Transportpflugposition, in der alle Arbeitsgeräte (23) vom Boden gelöst sind, zugeordnet sind, wobei das Bereitstellen der Steuersignale in dem Steuersystem das Empfangen von Steuerinformationen über eine vordefinierte Abfolge von Positionen und das Erzeugen der Steuersignale gemäß den Informationen über die vordefinierte Abfolge von Positionen umfasst; und
- Betätigen des Oberlenkers (21) und des Tiefensteuerrads (22) gemäß den Steuersignalen, während der Traktor (1) mit dem Pflug (2) am Vorgewende ankommt, sich durch das Vorgewende bewegt und das Vorgewende verlässt.

2. Verfahren nach Anspruch 1, wobei die Steuersignale für die Abfolge von Positionen ferner Positionen für eine Verbindung des Anhängerkupplungsmechanismus (20) definieren, durch den der Pflug (2) an den Traktor (1) angekuppelt wird.

3. Verfahren nach Anspruch 1 oder 2, wobei das Empfangen der Steuerinformationen das Auswählen der Steuerinformationen aus einer Vielzahl vordefinierter Abfolgen von Positionen umfasst.

4. Verfahren nach Anspruch 3, wobei das Auswählen der Steuerinformationen Folgendes umfasst:
- Erfassen eines gegenwärtigen Betriebsparameters für den Traktor (1) und/oder den Pflug (2); und
- Auswählen der Steuerinformationen in Abhängigkeit vom Betriebsparameter.

5. Verfahren nach mindestens einem der vorhergehenden Ansprüche, wobei das Bereitstellen der Steuersignale Folgendes umfasst:
- Erfassen eines gegenwärtigen Betriebsparameters für den Traktor (1) oder den Pflug (2); und
- Konfigurieren der Steuersignale in Abhängigkeit vom Betriebsparameter.

6. Verfahren nach mindestens einem der vorhergehenden Ansprüche, wobei das Bereitstellen des Anforderungssignals das Erzeugen des Anforderungssignals als Reaktion auf eine in dem Steuersystem empfangene Benutzereingabe umfasst.

7. Verfahren nach mindestens einem der vorhergehenden Ansprüche, wobei das Bereitstellen des Anforderungssignals das Erzeugen des Anforderungssignals als Reaktion auf Positionsinformationen umfasst, die für eine geografische Position des Traktors (1) und/oder des Pfluges (2) in dem Steuersystem bereitgestellt werden.

8. Landwirtschaftliches System mit
- einem Traktor (1);
- einem Pflug (2), der über einen Anhängerkupplungsmechanismus (20) an den Traktor (1) angekuppelt ist;
- Arbeitsgeräten (23), die auf einem Rahmen des Pfluges (2) aufgenommen sind;
- einem Tiefensteuerrad (22), das in der Höhe relativ zum Rahmen einstellbar ist;
- einem Oberlenker (21), der mit dem Rahmen zum Anheben des Rahmens verbunden ist; und
- einem Steuersystem, das an den Traktor (1) und/oder den Pflug (2) bereitgestellt ist; wobei das Steuersystem konfiguriert ist zum
- Betreiben des Pfluges (2) in einem normalen Betriebsmodus, während der Pflug (2) vom Traktor (1) über das Feld bewegt wird, wobei die Arbeitsgeräte (23) des Pfluges (2) im normalen Betriebsmodus mit dem Boden in Eingriff stehen;
- Bereitstellen eines Anforderungssignals in dem Steuersystem, wobei das Anforderungssignal eine Anforderung zum Starten eines Vorgewende-Steuerbetriebsmodus anzeigt; und
- als Reaktion auf das Anforderungssignal, Starten des Vorgewende-Steuerbetriebsmodus, der Folgendes umfasst:
- Bereitstellen von Steuersignalen in dem Steuersystem, wobei die Steuersignale eine Abfolge von Positionen sowohl für den Oberlenker (21) als auch für das Tiefensteuerrad (22) definieren, wobei die Abfolge von Positionen Positionen umfasst, die einer Zwischen-Pflugarbeitsposition, in der einige der Arbeitsgeräte (23) vom Boden gelöst sind, und einer Transportpflugposition, in der alle Arbeitsgeräte (23) vom Boden gelöst sind, zugeordnet sind, wobei das Bereitstellen der Steuersignale in dem Steuersystem das Empfangen von Steuerinformationen über eine vordefinierte Abfolge von Positionen und das Erzeugen der Steuersignale gemäß den Informationen über die vordefinierte Abfolge von Positionen umfasst; und
- Betätigen des Oberlenkers (21) und des Tiefensteuerrads (22) gemäß den Steuersignalen, während der Traktor (1) mit dem Pflug (2) am Vorgewende ankommt, sich durch das Vorgewende bewegt und das Vorgewende verlässt.

## Revendications

1. Procédé de fonctionnement d'un système agricole comportant
- un tracteur (1) ;
- une charrue (2), attelée au tracteur (1) par un mécanisme d'attelage (20) ;
- des outils de travail (23), reçus sur un châssis de la charrue (2) ;
- une molette de réglage de profondeur (22), réglable en hauteur par rapport au châssis ;
- une bielle supérieure (21), reliée au châssis pour soulever ledit châssis ; et
- un système de commande, prévu sur le tracteur (1) et/ou sur la charrue (2) ;
le procédé comprenant
- le fonctionnement de la charrue (2) en mode normal de fonctionnement tandis que la charrue (2) est déplacée par le tracteur (1) sur le champ, les outils de travail (23) de la charrue (2) étant en prise avec le sol en mode normal de fonctionnement ;
- l'utilisation d'un signal de demande dans le système de commande, le signal de demande indiquant une demande de démarrage d'un mode de fonctionnement de commande de tournière ; et
- en réponse au signal de demande, le démarrage du mode de fonctionnement de commande de tournière comprenant :
- l'utilisation des signaux de commande dans le système de commande, les signaux de commande définissant une séquence de positions à la fois pour la bielle supérieure (21) et pour la molette de réglage de profondeur (22), la séquence de positions comprenant des positions associées à une position de travail intermédiaire de la charrue, dans laquelle certains des outils de travail (23) sont mis hors de prise du sol, et une position de charrue de transport dans laquelle tous les outils de travail (23) sont mis hors de prise du sol, l'utilisation des signaux de commande, dans le système de commande, comprenant la réception d'informations de commande sur un séquence prédéfinie de positions et la production des signaux de commande selon les informations concernant la séquence prédéfinie de positions ; et
- le fonctionnement de la biellette supérieure (21) et de la molette de réglage de profondeur (22) selon les signaux de commande pendant que le tracteur (1) et la charrue (2) arrivent à la tournière, traversent la tournière puis quittent la tournière.

2. Procédé selon la revendication 1, dans lequel les signaux de commande, pour la séquence de positions, définissent en outre des positions, pour une liaison du mécanisme d'attelage (20), par laquelle la charrue (2) est attelée au tracteur (1).

3. Procédé selon la revendication 1 ou 2, dans lequel la réception des informations de commande comprend la sélection des informations de commande parmi une pluralité de séquences prédéfinies de positions.

4. Procédé selon la revendication 3, dans lequel la sélection des informations de commande comprend
- la détection d'un paramètre de fonctionnement actuel du tracteur (1) et/ou de la charrue (2) ; et
- la sélection des informations de commande en fonction du paramètre de fonctionnement.

5. Procédé selon au moins l'une des revendications précédentes, dans lequel l'utilisation des signaux de commande comprend
- la détection d'un paramètre de fonctionnement actuel du tracteur (1) et/ou de la charrue (2) ; et
- la configuration des signaux de commande en fonction du paramètre de fonctionnement.

6. Procédé selon au moins l'une des revendications précédentes, dans lequel l'utilisation du signal de demande comprend la production du signal de demande en réponse à une entrée d'utilisateur reçue dans le système de commande.

7. Procédé selon au moins l'une des revendications précédentes, dans lequel l'utilisation du signal de demande comprend la production du signal de demande en réponse à des informations de position fournies pour une position géographique du tracteur (1) et/ou de la charrue (2) dans le système de commande.

8. Système agricole, comportant
- un tracteur (1) ;
- une charrue (2), attelée au tracteur (1) par un mécanisme d'attelage (20) ;
- des outils de travail (23), reçus sur un châssis de la charrue (2) :
- une molette de réglage de profondeur (22), réglable en hauteur par rapport au châssis ;
- une bielle supérieure (21), reliée au châssis pour soulever le châssis ; et
- un système de commande, prévu sur le tracteur (1) et/ou sur la charrue (2) ;
le système de commande étant conçu
- pour actionner la charrue (2) dans un mode normal de fonctionnement tandis que la charrue (2) est déplacée par le tracteur (1) sur le champ, les outils de travail (23) de la charrue (2) étant en prise avec le sol dans le mode normal de fonctionnement ;
- pour fournir un signal de demande dans le système de commande, le signal de demande indiquant une demande de démarrage d'un mode de fonctionnement de commande de tournière ; et
- en réponse au signal de demande, pour démarrer le mode de fonctionnement de commande de tournière comprenant :
- l'utilisation des signaux de commande dans le système de commande, les signaux de commande définissant une séquence de positions à la fois pour la bielle supérieure (21) et pour la molette de réglage de profondeur (22), la séquence de positions comprenant des positions associées à une position de travail intermédiaire de la charrue, dans laquelle certains des outils de travail (23) sont mis hors de prise du sol, et une position de charrue de transport dans laquelle tous les outils de travail (23) sont mis hors de prise du sol, l'utilisation des signaux de commande, dans le système de commande, comprenant la réception d'informations de commande sur un séquence prédéfinie de positions et la production des signaux de commande selon les informations concernant la séquence prédéfinie de positions ; et
- l'actionnement de la biellette supérieure (21) et de la molette de réglage de profondeur (22) selon les signaux de commande pendant que le tracteur (1) et la charrue (2) arrivent à la tournière, traversent la tournière puis quittent la tournière.
